# EUROPEAN PATENT APPLICATION

(11) **EP 4 815 538 A1**
(43) Date of publication of application: **30.09.2026**
(21) Application number: 24893475.4
(22) Date of filing: 20.11.2024
(51) Int. Cl.: H04W 16/10

(54) **TRANSMISSION CONFIGURATION METHOD AND APPARATUS, AND TERMINAL, NETWORK DEVICE AND STORAGE MEDIUM**

(30) Priority: 23.11.2023 CN 202311576124
(71) Applicant: Vivo Mobile Communication Co., Ltd., Dongguan, Guangdong 523863 (CN)
(72) Inventor: WANG, Lihui, Dongguan, Guangdong 523863 (CN); PAN, Xueming, Dongguan, Guangdong 523863 (CN)
(74) Representative: Walaski, Jan Filip
(86) International application number: PCT/CN2024/133270
(87) International publication number: WO 2025/108319

(57) **Abstract**

The present application belongs to the technical field of communications. Disclosed are a transmission configuration method and apparatus, and a terminal, a network device and a storage medium. The transmission configuration method in the embodiments of the present application comprises: a network device determining configuration information of one serving cell of a terminal, wherein the serving cell comprises a plurality of frequency-domain units configured for the terminal, and at least two frequency-domain units are discontinuous in frequency domain; and the network device sending the configuration information of the serving cell to the terminal, wherein the configuration information of the serving cell comprises at least one piece of the following: first information, the first information being condition information that the plurality of frequency-domain units meet; and second information, the second information being feature information of a frequency-domain resource of the serving cell.

## Description

### CROSS-REFERENCE TO RELATED APPLICATIONS

This application claims priority to Chinese Patent Application No. 202311576124.X, filed with the China National Intellectual Property Administration on November 23, 2023 and entitled "TRANSMISSION CONFIGURATION METHOD AND APPARATUS, TERMINAL, NETWORK DEVICE, AND STORAGE MEDIUM", which is incorporated herein by reference in its entirety.

### TECHNICAL FIELD

This application pertains to the field of communication technologies, and specifically relates to a transmission configuration method and apparatus, a terminal, a network device, and a storage medium.

### BACKGROUND

Currently, a serving cell generally includes a fixed and contiguous frequency domain resource by default. In this way, a system capacity and coverage are inevitably limited.

### SUMMARY

Embodiments of this application provide a transmission configuration method and apparatus, a terminal, a network device, and a storage medium, to improve a system capacity and coverage.

According to a first aspect, a transmission configuration method is provided, including:
determining, by a network device, configuration information of a serving cell of a terminal, where the serving cell includes a plurality of frequency domain units configured for the terminal, and at least two frequency domain units are non-contiguous in frequency domain; and
sending, by the network device, the configuration information of the serving cell to the terminal; where
the configuration information of the serving cell includes at least one of the following:
   first information, where the first information is condition information satisfied by the plurality of frequency domain units; and
   second information, where the second information is feature information of frequency domain resources of the serving cell.

According to a second aspect, a transmission configuration method is provided, including:
receiving, by a terminal, configuration information of a serving cell sent by a network device, where the serving cell includes a plurality of frequency domain units configured for the terminal, and at least two frequency domain units are non-contiguous in frequency domain; and
performing, by the terminal, transmission on the serving cell based on the configuration information of the serving cell; where
the configuration information of the serving cell includes at least one of the following:
   first information, where the first information is condition information satisfied by the plurality of frequency domain units; and
   second information, where the second information is feature information of frequency domain resources of the serving cell.

According to a third aspect, a transmission configuration apparatus is provided, including:
a determining module, configured to determine configuration information of a serving cell of a terminal, where the serving cell includes a plurality of frequency domain units configured for the terminal, and at least two frequency domain units are non-contiguous in frequency domain; and
a sending module, configured to send the configuration information of the serving cell to the terminal; where
the configuration information of the serving cell includes at least one of the following:
   first information, where the first information is condition information satisfied by the plurality of frequency domain units; and
   second information, where the second information is feature information of frequency domain resources of the serving cell.

According to a fourth aspect, a transmission configuration apparatus is provided, including:
a receiving module, configured to receive configuration information of a serving cell sent by a network device, where the serving cell includes a plurality of frequency domain units configured for a terminal, and at least two frequency domain units are non-contiguous in frequency domain; and
a transmission module, configured to perform transmission on the serving cell based on the configuration information of the serving cell; where
the configuration information of the serving cell includes at least one of the following:
   first information, where the first information is condition information satisfied by the plurality of frequency domain units; and
   second information, where the second information is feature information of frequency domain resources of the serving cell.

According to a fifth aspect, a terminal is provided, where the terminal includes a processor and a memory, the memory stores a program or instructions capable of running on the processor, and when the program or instructions are executed by the processor, the steps of the method according to the second aspect are implemented.

According to a sixth aspect, a terminal is provided, including a processor and a communication interface, where the communication interface is configured to receive configuration information of a serving cell sent by a network device, the serving cell includes a plurality of frequency domain units configured for the terminal, and at least two frequency domain units are non-contiguous in frequency domain; and
the processor is configured to perform transmission on the serving cell based on the configuration information of the serving cell; where
the configuration information of the serving cell includes at least one of the following:
   first information, where the first information is condition information satisfied by the plurality of frequency domain units; and
   second information, where the second information is feature information of frequency domain resources of the serving cell.

According to a seventh aspect, a network device is provided, where the network device includes a processor and a memory, the memory stores a program or instructions capable of running on the processor, and when the program or instructions are executed by the processor, the steps of the method according to the first aspect are implemented.

According to an eighth aspect, a network device is provided, including a processor and a communication interface, where the processor is configured to determine configuration information of a serving cell of a terminal, the serving cell includes a plurality of frequency domain units configured for the terminal, and at least two frequency domain units are non-contiguous in frequency domain; and the communication interface is configured to send the configuration information of the serving cell to the terminal; where
the configuration information of the serving cell includes at least one of the following:
first information, where the first information is condition information satisfied by the plurality of frequency domain units; and
second information, where the second information is feature information of frequency domain resources of the serving cell.

According to a ninth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a tenth aspect, a wireless communication system is provided, including a terminal and a network device, where the terminal is configured to perform the steps of the method according to the second aspect, and the network device is configured to perform the steps of the method according to the first aspect.

According to an eleventh aspect, a chip is provided, where the chip includes a processor and a communication interface, the communication interface is coupled to the processor, and the processor is configured to run a program or instructions to implement the method according to the first aspect or to implement the method according to the second aspect.

According to a twelfth aspect, a computer program/program product is provided, where the computer program/program product is stored in a storage medium, and the program/program product is executed by at least one processor to implement the steps of the transmission configuration method according to the first aspect or to implement the steps of the transmission configuration method according to the second aspect.

In the embodiments of this application, based on scattered frequency domain resources and by determining configuration information of a serving cell of a terminal and informing the terminal of the configuration information of the serving cell, the network device can flexibly define a serving cell for the terminal, where the serving cell includes a plurality of frequency domain units configured for the terminal, and at least two frequency domain units are non-contiguous in frequency domain, so that the network device can flexibly and efficiently utilize scattered frequency domain resources from the perspectives of L1/L2/L3 signaling, procedure, and cell management, thereby improving a system capacity and coverage; and for the terminal side, aggregated spectra can improve a data rate perceived by users, reduce energy consumption, reduce delay, and expand a perceived coverage.

### BRIEF DESCRIPTION OF THE DRAWINGS

FIG. 1 is a block diagram of a wireless communication system.
FIG. 2 is a first schematic flowchart of a transmission configuration method according to an embodiment of this application.
FIG. 3 is a second schematic flowchart of a transmission configuration method according to an embodiment of this application;
FIG. 4 is a first schematic diagram of modules of a transmission configuration apparatus according to an embodiment of this application.
FIG. 5 is a second schematic diagram of modules of a transmission configuration apparatus according to an embodiment of this application.
FIG. 6 is a schematic structural diagram of a communication device according to an embodiment of this application.
FIG. 7 is a schematic structural diagram of a terminal according to an embodiment of this application.
FIG. 8 is a schematic structural diagram of a network device according to an embodiment of this application.

### DESCRIPTION OF EMBODIMENTS

The following clearly describes the technical solution in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, the use of "or" in this application means at least one of connected objects. For example, "A or B" covers three scenarios, namely, scenario one: including A but not including B; scenario two: including B but not including A; and scenario three: including both A and B. The character "/" generally indicates an "or" relationship between the contextually associated objects.

The term "indicate" in this application may be either a direct indication (or explicit indication) or an indirect indication (or implicit indication). The direct indication may be understood as that a sender explicitly informs a receiver of content such as specific information, an operation to be executed, or a result of a request in a sent indication. The indirect indication may be understood as that a receiver determines corresponding information based on an indication sent by a sender, performs judgment and determines an operation to be executed or a result of a request based on the judgment result, or the like.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, the new radio (New Radio, NR) system is described for an illustration purpose, and NR terms are used in most of the following descriptions, although these technologies may also be used in systems other than the NR system, for example, the 6th generation (6th Generation, 6G) communication system.

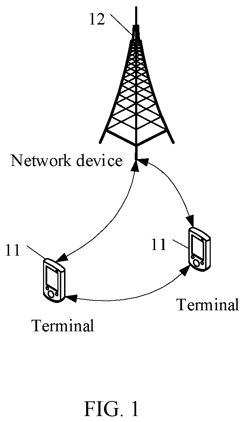

FIG. 1 is a block diagram of a wireless communication system to which the embodiments of this application may be applicable. The wireless communication system includes a terminal 11 and a network device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), a smart home device (a wireless communication-enabled home device such as a refrigerator, television, washing machine, or furniture), a game console, a personal computer (Personal Computer, PC), a teller machine, or a self-service machine. Wearable devices include smartwatches, smart bands, smart earphones, smart glasses, smart jewelry (smart bangles, smart bracelets, smart rings, smart necklaces, smart foot bangles, smart anklets, and the like), smart wristbands, and smart clothing. The vehicle user equipment may also be referred to as an in-vehicle terminal, an in-vehicle controller, an in-vehicle module, an in-vehicle component, an in-vehicle chip, an in-vehicle unit, or the like. It should be noted that the terminal 11 is not limited to a specific type in the embodiments of this application. The network device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved node B (Evolved Node B, eNB), a next-generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved Node B (home evolved Node B), a transmission reception point (Transmission Reception Point, TRP), or other appropriate terms in the art. Provided that the same technical effects are achieved, the base station is not limited to any particular technical terms. It should be noted that in the embodiments of this application, only the base station in the NR system is used as an example, but the base station is not limited in type.

For ease of understanding, the following describes some content involved in the embodiments of this application:

### I. Reasons and benefits for introducing one flexible serving cell (one flexible cell)

A sub-3 GHz spectrum has advantages such as low penetration loss, and plays an important role in cellular network deployment due to its good coverage. In addition, compared with the C-band, the sub-3 GHz spectrum is fragmented and allocated to international mobile telecommunications (International Mobile Telecommunications, IMT), and due to competition between mobile operators, the bandwidth of each spectrum block is relatively narrow. On the other hand, almost all operators around the world have multiple sub-3 GHz frequency bands (for example, 700 MHz, 800 MHz, 900 MHz, 1.4 GHz, 1.8 GHz, 2.1 GHz, 2.3 GHz or 2.6 GHz bands). If these non-contiguous spectra can be effectively aggregated to form a "single" carrier with considerable bandwidth, all operators can benefit.

Compared with long term evolution (Long Term Evolution, LTE), new radio (New Radio, NR) provides significant capacity and experience advantages by using wideband communication and large-scale multiple in multiple out (Multiple In Multiple Out, MIMO). Specifically, application cases that currently require high-throughput communication need wide bandwidths. Therefore, wideband operations on these non-contiguous spectra below 3 GHz will be key to meeting the growing requirements of industrial Internet of Things (ToB) and consumer Internet of Things (ToC) in the future. As a result, a potential solution is a flexible serving cell (flexible cell), which may contain scattered spectrum resources, with the purpose of efficiently and flexibly utilizing these scattered contiguous or non-contiguous spectra.

### II. 5G non-RedCap (Non-RedCap) initial (Initial) bandwidth part (Band Width Part, BWP) and control resource set 0 (CORESET0)

Initial uplink and downlink BWPs, namely, an initial downlink BWP (Initial DL BWP) and initial uplink BWP (Initial UL BWP), are configured in system information block (System Information Block, SIB) 1. If an initial BWP is not configured, a size of the initial BWP is a size of CORESET0 by default. The initial BWP is mainly used for an initial access procedure such as reception of SIB1, reception of random access response (Random Access Response, RAR) and Msg4 and sending of preamble (preamble) and Msg3 during a random access procedure, and the like.

A terminal-side process for a cell search/initial access procedure:
1. Receive a synchronization signal block (Synchronization Signal Block, SSB), decode a master information block (Master Information Block, MIB) carried in a physical broadcast channel (Physical Broadcast Channel, PBCH) in the SSB to obtain CORESET0 information.
2. Monitor downlink control information (Downlink Control Information, DCI) of SIB1 in CORESET0.
3. Decode SIB1 to obtain an initial DL/UL BWP, and a control resource set (Control Resource Set, CORESET) of RAR/Msg4 DCI.

CORESET: Defines information such as frequency domain resources and the number of orthogonal frequency division multiplexing (Orthogonal Frequency Division Multiplexing, OFDM) symbols occupied by a physical downlink control channel (Physical Downlink Control Channel, PDCCH) carrying DCI in frequency domain and time domain respectively.

In NR, a PDCCH has multiple search spaces, including common search spaces and UE-specific search spaces, as shown in the following table:

| **SS type** | **Function** |
|---|---|
| Type 0 common search space (Type0 Common SearchSpace, Type0 CSS) | Used for receiving a PDCCH scheduling SIB1 |
| Type 0A common search space (Type0A Common SearchSpace) | Used for receiving a PDCCH scheduling other SIB messages |
| Type 1 common search space (Type1 Common SearchSpace) | Used for receiving a PDCCH of a random access channel (Random Access Channel RACH) |
| Type 2 common search space (Type2 Common SearchSpace) | Used for receiving a PDCCH for paging (Paging) |
| Type 3 common search space (Type3 Common SearchSpace) | Used for receiving common DCI of a group of users |
| UE-specific search space (UE-specific SearchSpace) | Used for receiving a PDCCH scheduling user-specific data |

### III. 5G RedCap separate initial downlink/uplink BWP (separate initial DL/UL BWP)

For RedCap (reduced capability) user equipment (User Equipment, UE), a supported bandwidth is less than or equal to a bandwidth capability of ordinary UE. Therefore, an initial BWP bandwidth configured by a network for the ordinary UE may exceed a capability of the RedCap UE, so the network can configure an additional/separate initial BWP for the RedCap UE, so that the bandwidth of the BWP is within the capability range of the RedCap UE.

In addition, the RedCap UE has a smaller number of receive antennas than the ordinary UE, and therefore has reception performance not as good as the ordinary UE, which may cause the network to use larger overheads and more resources for transmission to the RedCap UE. In this way, even though the bandwidth of the BWP configured by the network is within the capability range of the RedCap UE, if the network uses the same BWP for transmission to the ordinary UE and the RedCap UE, the load on the BWP will be too heavy, leading to congestion in transmission to ordinary terminals. Therefore, a new RedCap work item (Work Item) draws the following conclusions:
1. The network may configure a separate initial DL BWP for the RedCap UE, referred to as a separate initial BWP. If a search space for random access related operations, namely, Type 1 CSS, is configured on the separate initial BWP, and no paging-related search space is configured, the separate initial BWP may not include SSB/CORESET0/SIB.
   The Redcap UE in radio resource control connection_idle (RRC_IDLE) and radio resource control connection_inactive (RRC_INACTIVE) needs to monitor paging messages in the non-RedCap initial BWP associated with the CD-SSB. That is, RedCap UE in RRC_IDLE and RRC_INACTIVE is not further considered for monitoring paging in the initial BWP associated with the CD-SSB.
2. For an active DL BWP (active DL BWP) configured for the RedCap UE in radio resource control connection_connected (RRC_CONNECTED), if it does not include a CD-SSB and the entire CORESET0,
   RedCap UE with basic capabilities expects the active DL BWP to include an NCD-SSB for the serving cell, but not CORESET0/SIB; and
   RedCap UE with higher capabilities can perform operations on the active DL BWP including no SSB.

Note: The periodicity of the NCD-SSB does not need to have the same configuration as the CD-SSB.

Note: The periodicity of the NCD-SSB should not be less than the periodicity of the CD-SSB.

### IV. Spectrum sharing in different wireless communication systems

Operators often operate multiple standard networks at the same time. After 5G deployment, there will be scenarios where 2G, 3G, 4G, and 5G operate simultaneously. With the continuous increase in mobile broadband network traffic demand, operators have refarmed from 2G/3G networks to 4G, and then from 4G to 5G. In traditional multi-standard networks of operators, each standard needs to occupy certain spectrum resources fixedly. Since each standard exclusively occupies a spectrum, if the spectrum between different standards cannot be shared in a staggered peak manner, this will lead to great waste of spectrum resources. At present, a 4G and 5G spectrum sharing topic has been established. This technology can realize dynamic allocation of spectrum resources to 4G or 5G on demand in the same frequency band.

The method in the embodiments of this application is applicable to 5G, 6G, and subsequent evolved communication systems.

The following describes in detail a transmission configuration method and apparatus, a terminal, a network device, and a storage medium provided in the embodiments of this application through some embodiments and application scenarios thereof with reference to the accompanying drawings.

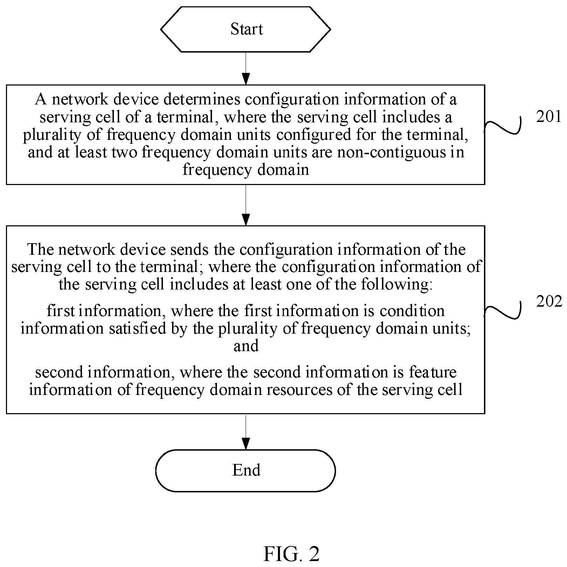

As shown in FIG. 2, a transmission configuration method according to an embodiment of this application includes the following steps:
Step 201. A network device determines configuration information of a serving cell of a terminal, where the serving cell includes a plurality of frequency domain units configured for the terminal, and at least two frequency domain units are non-contiguous in frequency domain.
Step 202. The network device sends the configuration information of the serving cell to the terminal; where the configuration information of the serving cell includes at least one of the following: first information, where the first information is condition information satisfied by the plurality of frequency domain units; and second information, where the second information is feature information of frequency domain resources of the serving cell.

In this way, according to the above steps, based on scattered frequency domain resources and by determining configuration information of a serving cell of a terminal and informing the terminal of the configuration information of the serving cell, the network device can flexibly define a serving cell for the terminal, where the serving cell includes a plurality of frequency domain units configured for the terminal, and at least two frequency domain units are non-contiguous in frequency domain, so that the network device can flexibly and efficiently utilize scattered frequency domain resources from the perspectives of L1/L2/L3 signaling, procedure, and cell management, thereby improving a system capacity and coverage; and for the terminal side, aggregated spectra can improve a data rate perceived by users, reduce energy consumption, reduce delay, and expand a perceived coverage.

It should be noted that the frequency domain unit may be configured for the terminal in a resource block (Resource Block, RB), an RB set (RB set, RBS), an RB group (RB Group, RBG), or a BWP as a unit.

Optionally, in this embodiment, the first information includes at least one of the following:
transmission parameters of a first signal on the plurality of frequency domain units are quasi-co-located;
transmission parameters of a second signal associated with a control channel or data channel on the plurality of frequency domain units are quasi-co-located;
the transmission parameters of the first signal and the transmission parameters of the second signal are quasi-co-located, where the first signal is a signal on the plurality of frequency domain units, and the second signal is a signal associated with a control channel or data channel on the plurality of frequency domain units;
a difference in downlink reception times of different frequency domain units satisfies a first time range;
a difference in uplink timing advances of different frequency domain units satisfies a second time range; and
a difference in downlink powers of different frequency domain units is less than or equal to a first threshold.

The first information including that transmission parameters of a first signal on the plurality of frequency domain units are quasi-co-located indicates that for the plurality of frequency domain units included in the corresponding serving cell, transmission parameters of the first signal on different frequency domain units may be quasi-co-located. For example, for a plurality of frequency domain units 1 and 2 included in the serving cell, transmission parameters of the first signal on frequency domain unit 1 and transmission parameters of the first signal on frequency domain unit 2 are quasi-co-located.

The first information including that transmission parameters of a second signal associated with a control channel or data channel on the plurality of frequency domain units are quasi-co-located indicates that for the plurality of frequency domain units included in the serving cell, transmission parameters of the second signal associated with a control channel or data channel on different frequency domain units may be quasi-co-located. For example, for a plurality of frequency domain units 1 and 2 included in the serving cell, transmission parameters of the second signal associated with a control channel on frequency domain unit 1 and transmission parameters of the second signal associated with a control channel on frequency domain unit 2 are quasi-co-located; or transmission parameters of the second signal associated with a control channel on frequency domain unit 1 and transmission parameters of the second signal associated with a data channel on frequency domain unit 2 are quasi-co-located.

The first information including that the transmission parameters of the first signal and the transmission parameters of the second signal are quasi-co-located indicates that in addition to that the transmission parameters of the first signal are quasi-co-located and the transmission parameters of the second signal are quasi-co-located, the transmission parameters of the first signal and the transmission parameters of the second signal may also be quasi-co-located. For example, for a plurality of frequency domain units 1 and 2 included in the serving cell, transmission parameters of the first signal on frequency domain unit 1 and transmission parameters of the second signal associated with a control channel or data channel on frequency domain unit 1 are quasi-co-located.

It should be noted that the first signal is a reference signal on a frequency domain unit, and the second signal may be a demodulation reference signal of a control channel or data channel.

The first information including that a difference in downlink reception times of different frequency domain units satisfies a first time range indicates that for the plurality of frequency domain units included in the serving cell, a difference in downlink reception times of any two frequency domain units satisfies a first time range T1_difference. Optionally, T1_difference may be determined based on a set value. For example, if the set value is 260 ns, T1_difference = ±260 ns.

The first information including that a difference in uplink timing advances of different frequency domain units satisfies a second time range indicates that for the plurality of frequency domain units included in the serving cell, a difference in uplink timing advances of any two frequency domain units satisfies a second time range T2_difference. Optionally, T2_difference may be determined based on a set value. For example, if the set value is 260 ns, T2_difference = ±260 ns. The first time range and the second time range may be the same or different.

The first information including that a difference in downlink powers of different frequency domain units satisfies less than or equal to a first threshold indicates that for the plurality of frequency domain units included in the serving cell, a difference in downlink powers of any two frequency domain units is less than or equal to a first threshold P_difference. Optionally, P_difference is preset, for example, P_difference = 6 dB.

Optionally, in this embodiment, the network device may select, based on at least one item in the first information, a plurality of frequency domain units satisfying the conditions from candidate frequency domain units as the plurality of frequency domain units included in the serving cell.

Optionally, in this embodiment, the transmission parameters include at least one of the following:
a Doppler shift, a Doppler spread, an average delay, a delay spread, a spatial transmission parameter, and a spatial reception parameter.

The spatial transmission parameter or spatial reception parameter may include a transmission configuration indicator (Transmission Configuration Indicator, TCI) and spatial relations (Spatial relations).

Optionally, in this embodiment, the second information includes at least one of the following:
the plurality of frequency domain units are contiguous or non-contiguous in frequency domain;
the plurality of frequency domain units use the same or different duplex modes;
the plurality of frequency domain units use the same or different types of spectra;
sizes of frequency domain resources included in the plurality of frequency domain units are different;
frequency domain resources of each frequency domain unit are contiguous;
uplink frequency domain resources and downlink frequency domain resources of the serving cell include at least one different frequency domain unit;
uplink frequency domain resources and downlink frequency domain resources of the serving cell have the same center frequency; and
each of the states of the frequency domain units included in the uplink frequency domain resources of the serving cell and the frequency domain units included in the downlink frequency domain resources of the serving cell includes at least one of the following: active state, inactive state, and dormancy state.

The second information including that the plurality of frequency domain units are contiguous or non-contiguous in frequency domain may indicate that for the plurality of frequency domain units included in the serving cell, different frequency domain units are all non-contiguous, or partially contiguous and partially non-contiguous in frequency domain. For example, for a plurality of frequency domain units 1, 2, and 3 included in the serving cell, the three frequency domain units are all non-contiguous in frequency domain, or frequency domain units 1 and 2 are contiguous in frequency domain, but non-contiguous with frequency domain unit 3.

The second information including that the plurality of frequency domain units use the same or different duplex modes indicates that for the plurality of frequency domain units included in the serving cell, the plurality of frequency domain units may use the same duplex mode or different duplex modes. For example, for a plurality of frequency domain units 1 and 2 included in the serving cell, frequency domain units 1 and 2 both use frequency division duplexing (Frequency Division Duplexing, FDD), or frequency domain unit 1 uses FDD, and frequency domain unit 2 uses time division duplexing (Time Division Duplexing, TDD).

The second information including that the plurality of frequency domain units use the same or different types of spectra indicates that for the plurality of frequency domain units included in the serving cell, the plurality of frequency domain units may use the same type of spectrum, for example, a plurality of frequency domain units 1 and 2 included in the serving cell both use a licensed spectrum; or the plurality of frequency domain units may use different types of spectra, for example, frequency domain unit 1 uses a licensed spectrum, and frequency domain unit 2 uses an unlicensed spectrum.

The second information including that sizes of frequency domain resources included in the plurality of frequency domain units are different indicates that for the plurality of frequency domain units included in the serving cell, sizes of the plurality of frequency domain units may be different. For example, for a plurality of frequency domain units 1 and 2 included in the serving cell, a size of frequency domain unit 1 is 5 MHz, and a size of frequency domain unit 2 is 20 MHz.

The second information including that frequency domain resources of each frequency domain unit are contiguous indicates that for the plurality of frequency domain units included in the serving cell, each frequency domain unit is contiguous in frequency domain. For example, for the foregoing frequency domain unit 1, frequency domain unit 1 includes a plurality of RBs, and all these RBs are contiguous.

It should be known that in this embodiment, the plurality of frequency domain units included in the serving cell include uplink frequency domain resources or downlink frequency domain resources, that is, the uplink frequency domain resources of the serving cell may include part or all of the plurality of frequency domain units, and the downlink frequency domain resources of the serving cell include part or all of the plurality of frequency domain units. In this way, the second information including that uplink frequency domain resources and downlink frequency domain resources of the serving cell include at least one different frequency domain unit indicates that for the plurality of frequency domain units included in the serving cell, frequency domain units included in the uplink frequency domain resources and downlink frequency domain resources of the serving cell may partially overlap. For example, for a plurality of frequency domain units 1, 2, 3, and 4 included in the serving cell, uplink frequency domain resources of the serving cell may be frequency domain units 1 and 2, and downlink frequency domain resources of the serving cell may be frequency domain units 1, 2, 3, and 4.

The second information including that uplink frequency domain resources and downlink frequency domain resources of the serving cell have the same center frequency indicates that when uplink frequency domain resources and downlink frequency domain resources are configured for the terminal, uplink frequency domain resources and downlink frequency domain resources with the same center frequency are configured for the terminal. Alternatively, it can be understood that a frequency domain range included in all activated uplink frequency domain units of the serving cell and a frequency domain range included in all activated downlink frequency domain units have the same center frequency for the terminal.

The second information including that each of the states of the frequency domain units included in the uplink frequency domain resources of the serving cell and the frequency domain units included in the downlink frequency domain resources of the serving cell includes at least one of the following: active state (active), inactive state (inactive or deactivated), and dormancy state (dormancy), indicates that for the uplink frequency domain resources and downlink frequency domain resources configured for the terminal, different frequency domain units included therein may include any one of the above states. Certainly, different frequency domain units may have different states.

Optionally, in this embodiment, an interval between adjacent non-contiguous frequency domain units in the plurality of frequency domain units is less than or equal to a second threshold.

In this way, for the plurality of frequency domain units included in the serving cell, among the frequency domain units that are not contiguous (that is, non-contiguous frequency domain units) in the plurality of frequency domain units, the interval between adjacent non-contiguous frequency domain units is less than or equal to the second threshold. The interval may also be referred to as a frequency offset or gap. The second threshold is a preset interval threshold F_threshold.

Optionally, in this embodiment, the method further includes the following steps:
the network device determines, on the serving cell, configuration information of a first anchor bandwidth part (BWP) of the terminal; and
the network device sends the configuration information of the first anchor BWP to the terminal; where
the configuration information of the first anchor BWP includes at least one of the following:
   third information, where the third information is feature information of the first anchor BWP; and
   fourth information, where the fourth information is information of a first target supported for transmission by the first anchor BWP.

In other words, for the serving cell configured for the terminal, the network device further determines configuration information of a first anchor BWP (First anchor BWP, FA BWP) of the terminal, and informs the terminal thereof so that the terminal can perform subsequent transmissions.

Optionally, the third information serves as feature information of the first anchor BWP, and the network device may determine the first anchor BWP based on the third information.

Optionally, the third information includes at least one of the following:
the first anchor BWP is used for transmitting non-access stratum NAS mobility information during radio resource control RRC connection establishment, re-establishment, or handover, and is used for secure transmission during RRC connection re-establishment or handover;
the first anchor BWP has an association relationship with a cell-defining synchronization signal block CD-SSB located on a synchronization raster;
the first anchor BWP is configured to an active state;
the first anchor BWP is not allowed to be configured to a dormancy state or an inactive state.

The first anchor BWP being used for transmitting NAS mobility information during RRC connection establishment, re-establishment, or handover indicates that during RRC connection establishment, re-establishment, or handover, the first anchor BWP provides NAS mobility information; and being used for secure transmission during RRC connection re-establishment or handover indicates that during RRC connection re-establishment or handover, the first anchor BWP provides security inputs.

Optionally, that the fourth information is information of a first target supported for transmission by the first anchor BWP may also be understood as that the fourth information indicates a first target supported for transmission by the first anchor BWP.

Optionally, the first target includes at least one of the following:
a CD-SSB, a tracking reference signal (Tracking reference signal, TRS), system information, broadcast information, transmission objects in an initial access procedure, transmission objects in a random access procedure, transmission objects in a small data transmission procedure, paging information, paging early indication (Paging Early Indication, PEI), terminal group common information, and user data.

Optionally, in this embodiment, the method further includes the following steps:
the network device determines, on the serving cell, configuration information of a second anchor BWP of the terminal; and
the network device sends the configuration information of the second anchor BWP to the terminal; where
the configuration information of the second anchor BWP includes fifth information, where the fifth information is information of a second target supported for transmission by the second anchor BWP.

In other words, for the serving cell configured for the terminal, the network device further determines configuration information of a second anchor BWP (Second anchor BWP, SA BWP) of the terminal, and informs the terminal thereof so that the terminal can perform subsequent transmissions. Certainly, the network device configures one or more SA BWPs for the terminal.

That the fifth information is information of a second target supported for transmission by the second anchor BWP may also be understood as that the fifth information indicates a second target supported for transmission by the second anchor BWP, serving as an indication of the use of the second anchor BWP.

Optionally, the configuration information of the second anchor BWP includes at least one of the following: a frequency domain position and frequency domain resource size of the second anchor BWP, a first characteristic/function associated with the second anchor BWP, and a transmission target associated with the first characteristic/function. The first characteristic/function includes at least one of the following: a terminal type, a terminal capability, and a service type.

Optionally, the second target includes at least one of the following:
a non-cell-defining synchronization signal block NCD-SSB, a TRS, system information, broadcast information, transmission objects in an initial access procedure, transmission objects in a random access procedure, transmission objects in a small data transmission procedure, paging information, PEI, terminal group common information, and user data.

Detailed descriptions of the foregoing first target and second target are as follows:
The system information may be system information of the serving cell scheduled by a PDCCH, where the PDCCH is received through Type0 CSS or Type0A CSS.

The broadcast information may be broadcast information (broadcast) scheduled by a PDCCH, where the PDCCH is received through Type0B CSS.

The paging information may be scheduled by a PDCCH, where the PDCCH is received through Type2 CSS.

The PEI may be received through Type2A CSS.

The terminal group common information may be scheduled by DCI, where the DCI is received through Type3 CSS.

The user data may be scheduled by a PDCCH, where the PDCCH is received through UE SS.

As a result, in this embodiment, the first target or second target may further include at least one of a PDCCH and DCI scheduling the foregoing information.

Optionally, the transmission objects in an initial access procedure, the transmission objects in a random access procedure, and the transmission objects in a small data transmission procedure may include a first uplink transmission object and a first downlink transmission object.

The first uplink transmission object is also referred to as a first uplink transmission (First UL Tx), including at least one of the following: a PRACH, a message A (MSGA), a small data transmission-configured grant (Small Data Transmission-Configured Grant, SDT-CG), and a PUCCH.

The PRACH may include at least one of the following: a PRACH in initial access (initial access), a PRACH in four-step random access, a small data transmission based on a PRACH (SDT-PRACH), and a PRACH triggered by a PDCCH order. The MSGA includes an MSGA PRACH and an MSGA PUSCH. The PUCCH is a PUCCH carrying HARQ-ACK information transmitted on a cell common PUCCH.

The first downlink transmission object is also referred to as a first downlink transmission (First DL Tx), including at least one of the following: an SSB, an RAR, an MSGA, and an MSGB.

In this embodiment, after receiving the configuration information of the first anchor BWP and the configuration information of the second anchor BWP, the terminal can select a third anchor BWP and perform at least one of the following operations: initial access; random access; small data transmission; monitoring paging messages; receiving PEI; and receiving sent broadcast information.

Optionally, the terminal selects the third anchor BWP based on at least one of the following:
indication information of the network device;
defined first BWP information;
an identifier (ID) of the terminal;
sizes of the BWPs; and
a transmission target associated with at least one of the following being configured on the third anchor BWP: a terminal type, a terminal capability, and a service type.

The information used by the terminal for selecting the third anchor BWP may be referred to as a first selection criterion.

The indication information of the network device is used to indicate which one of the FA BWP and SA BWP is to be selected by the terminal as the third anchor BWP. For example, if the indication information indicates the FA BWP, the terminal selects the FA BWP as the third anchor BWP. For another example, if the indication information indicates that the third anchor BWP is the SA BWP for transmitting the SSB or TRS, the terminal selects the SA BWP for transmitting the SSB or TRS as the third anchor BWP.

The defined first BWP information is information of a BWP that the terminal preferentially selects between the FA BWP and SA BWP as specified by a protocol. For example, if the first BWP information includes a BWP identifier (ID), the terminal selects the corresponding BWP as the third anchor BWP based on the BWP ID. For another example, if the first BWP information includes transmission of the SSB or TRS by the BWP, the terminal selects the SA BWP or FA BWP for transmitting the SSB or TRS as the third anchor BWP.

The identifier of the terminal may be used to determine an identifier of the third anchor BWP, for example, determining the ID of the third anchor BWP using (UE_ID mod N) or (UE_ID mod N) + 1, where N = (total number of FA BWPs + total number of SA BWPs), or N = total number of SA BWPs.

The sizes of the BWPs may be understood as the size of the FA BWP and the size of the SA BWP. For example, the terminal may select, based on the size of the FA BWP and the size of the SA BWP, the BWP with the larger or smaller bandwidth as the third anchor BWP. For another example, based on its own capability, the terminal compares such as a size of the bandwidth it supports with the size of the FA BWP and the size of the SA BWP, and selects the BWP with a size less than or equal to the bandwidth size supported by the terminal as the third anchor BWP.

The supported transmission target may be understood as an expected transmission target of the third anchor BWP. For example, if the supported transmission target is an SSB or a TRS, the terminal may select the BWP supporting transmission of SSB or TRS as the third anchor BWP. Certainly, the supported transmission target may be limited for the SA BWP, and then the terminal may select the SA BWP supporting transmission of SSB or TRS as the third anchor BWP.

That a transmission target associated with at least one of the following is configured on the third anchor BWP: a terminal type, a terminal capability, and a service type, may be understood as that the third anchor BWP expected to be selected by the terminal is a BWP configured with a transmission target associated with at least one of a terminal type, a terminal capability, and a service type.

In this embodiment, the transmission target includes at least one of the following: broadcast information, transmission objects in an initial access procedure, transmission objects in a random access procedure, transmission objects in a small data transmission procedure, paging information, and PEI. In this way, the third anchor BWP expected to be selected by the terminal may be a BWP configured to receive broadcast information associated with different terminal types.

In this embodiment, the terminal type includes at least one of the following: UE supporting enhanced mobile broadband (enhanced Mobile BroadBand, eMBB), UE supporting ultra-reliable low-latency communications (Ultra-Reliable Low-Latency Communications, URLLC), RedCap UE, UE supporting multimedia telephone communication (Multimedia Telephone Communication, MTC), UE supporting Internet of Things (Internet of Things, IoT), and UE supporting extended reality (eXtended Reality, XR). The terminal capability includes at least one of the following: maximum supported bandwidth (including RF bandwidth, baseband bandwidth, system bandwidth, channel bandwidth, and the like), supported frequency band, and downlink processing capability. The service type may also be understood as a use case type, and the service type includes at least one of the following: eMBB, URLLC, XR, IoT, and non-terrestrial network (Non Terrestrial Network, NTN).

Certainly, the terminal may also select the third anchor BWP based on an implementation thereof, for example, selecting randomly.

In this embodiment, the terminal selecting the third anchor BWP based on the first selection criterion is applicable to a situation where the network device configures a plurality of SA BWPs for the terminal, and the plurality of SA BWPs support transmission of at least one of the following:
broadcast information, transmission objects in an initial access procedure, transmission objects in a random access procedure, transmission objects in a small data transmission procedure, paging information, and PEI.

In addition, considering that the terminal may select a plurality of third anchor BWPs, in this embodiment, optionally, in a case that a plurality of third anchor BWPs are selected, the terminal selects a fourth anchor BWP from the plurality of third anchor BWPs based on at least one of the following:
defined second BWP information;
identifiers of the BWPs;
the identifier of the terminal;
sizes of the BWPs; and
a supported transmission target.

The plurality of third anchor BWPs may be the FA BWP and at least one SA BWP, or merely a plurality of SA BWPs. The information used by the terminal for selecting the fourth anchor BWP may be referred to as a second selection criterion.

The defined second BWP information is information of a BWP that the terminal preferentially selects from the plurality of third anchor BWPs as specified by a protocol. For example, if the second BWP information includes a BWP ID, the terminal selects the corresponding BWP as the fourth anchor BWP based on the BWP ID. For another example, if the second BWP information includes transmission of the SSB or TRS by the BWP, the terminal selects the SA BWP or FA BWP for transmitting the SSB or TRS as the fourth anchor BWP.

The BWP ID may be understood as the ID of the SA BWP, for example, the terminal selects the SA BWP with the largest or smallest ID among a plurality of SA BWPs as the fourth anchor BWP; or may be understood as the ID of all third anchor BWPs, for example, the terminal selects the third anchor BWP corresponding to the largest or smallest ID as the fourth anchor BWP.

The identifier of the terminal may be used for determining an identifier of the fourth anchor BWP, for example, determining the ID of the fourth anchor BWP using (UE_ID mod N) or (UE_ID mod N) + 1, where N = (total number of FA BWPs + total number of SA BWPs), N = total number of SA BWPs, or N = M, M being the total number of FA BWPs satisfying the first selection criterion and/or the total number of SA BWPs satisfying the first selection criterion.

The sizes of the BWPs may be understood as the sizes of all third anchor BWPs, for example, the terminal may select, based on the sizes of all third anchor BWPs, the BWP with the largest or smallest bandwidth as the fourth anchor BWP; or may be understood as the sizes of SA BWPs, for example, the terminal selects the SA BWP with the largest or smallest bandwidth as the fourth anchor BWP.

The supported transmission target may be understood as an expected transmission target of the fourth anchor BWP. For example, if the supported transmission target is an SSB or a TRS, the terminal may select the third anchor BWP supporting transmission of SSB or TRS as the fourth anchor BWP. Certainly, the supported transmission target may be limited for SA BWPs, and then the terminal may select the SA BWP supporting transmission of SSB or TRS as the fourth anchor BWP.

Certainly, the terminal may also select the fourth anchor BWP based on an implementation thereof, for example, selecting randomly.

Optionally, for different terminals, the specific content of the first selection criterion and the second selection criterion may be different.

Optionally, the priorities of the items in the first selection criterion and second selection criterion may be the same or different. If the priorities are different, when the terminal makes a selection based on the first selection criterion or the second selection criterion, the selection is performed in a descending order of the priorities. For example, the first selection criterion includes the defined first BWP information and the identifier of the terminal, where the priority of the defined first BWP information is higher than the priority of the identifier of the terminal, and then the terminal selects the third anchor BWP in an order from the first BWP information to the identifier of the terminal.

Optionally, in this embodiment, the method further includes the following step:
the network device determines, based on at least one of the following, whether to send the NCD-SSB to the terminal on the second anchor BWP:
whether a synchronization signal block SSB is sent on an adjacent anchor BWP of the second anchor BWP;
an interval between center frequencies of the second anchor BWP and an adjacent anchor BWP;
a size of the second anchor BWP; and
transmission content supported by the second anchor BWP.

In this way, for the NCD-SSB and one second anchor BWP, the network device determines whether to send the NCD-SSB to the terminal on this second anchor BWP based on the foregoing content.

In this embodiment, an adjacent anchor BWP of the second anchor BWP refers to, for a given SA BWP, the previous or next SA BWP adjacent to the SA BWP in frequency domain resource. For example, frequency domain units 0, 1, 2, 3, and 4 occupy resource indexes in an ascending order in frequency domain. The given second anchor BWP occupies frequency domain unit 3, the adjacent previous SA BWP of the second anchor BWP occupies frequency domain unit 2 or frequency domain units 1 and 2, and the adjacent next SA BWP of the second anchor BWP occupies frequency domain unit 4. It should be noted that the adjacent anchor BWP of the second anchor BWP may be an SA BWP or FA BWP.

When whether to send the NCD-SSB to the terminal on the second anchor BWP is determined based on whether an SSB is sent on an adjacent anchor BWP of the second anchor BWP, it is necessary to consider whether the SSB (the SSB includes a CD-SSB or an NCD-SSB) is sent on the adjacent anchor BWP of the second anchor BWP. Optionally, if no SSB is sent on the adjacent anchor BWP of the second anchor BWP, it is determined that the NCD-SSB is to be sent on the second anchor BWP; and if an SSB is sent on the adjacent anchor BWP of the second anchor BWP, it is determined that the NCD-SSB is not to be sent on the second anchor BWP.

When whether to send the NCD-SSB to the terminal on the second anchor BWP is determined based on the interval between center frequencies of the second anchor BWP and an adjacent anchor BWP, optionally, the interval is compared with a third threshold to determine whether to send the NCD-SSB to the terminal on the second anchor BWP. If the interval is less than or equal to the third threshold, it is determined that the NCD-SSB is not to be sent on the second anchor BWP, and the terminal may use an SSB (CD-SSB or NCD-SSB) of the adjacent SA BWP for uplink and downlink transmission; and if the interval is greater than the third threshold, the NCD-SSB is to be sent on the second anchor BWP, and the terminal may use the NCD-SSB on the second anchor BWP for uplink and downlink transmission. The third threshold is a preconfigured or predefined interval threshold.

When whether to send the NCD-SSB to the terminal on the second anchor BWP is determined based on the size of the second anchor BWP, the size of the second anchor BWP needs to be compared with a size of a frequency domain resource required for sending the NCD-SSB. If the size of the second anchor BWP satisfies the size of the frequency domain resource required for sending the NCD-SSB, the NCD-SSB is sent on the second anchor BWP; and if the size of the second anchor BWP does not satisfy the size of the frequency domain resource required for sending the NCD-SSB, the NCD-SSB is not sent on the second anchor BWP. For example, the size of the second anchor BWP is 3 MHz, while the size of the frequency domain resource required for the NCD-SSB is 5 MHz, then the NCD-SSB is not sent on the second anchor BWP. In a case that the NCD-SSB is not sent on the second anchor BWP, optionally, the terminal expects an SSB (CD-SSB or NCD-SSB) to be sent on an adjacent SA BWP of the second anchor BWP and uses the SSB for uplink and downlink transmission; or the terminal expects a TRS to be sent on the second anchor BWP and uses the TRS for uplink and downlink transmission on the second anchor BWP.

The determining whether to send the NCD-SSB to the terminal on the second anchor BWP based on transmission content supported by the second anchor BWP may include:
if the second anchor BWP supports monitoring of paging information and/or PEI, the CD-SSB or NCD-SSB is sent to the terminal on the second anchor BWP, and optionally, the terminal may use the NCD-SSB for monitoring paging information on the second anchor BWP; and
if the second anchor BWP does not support monitoring of paging information but supports initial access or small data transmission based on a PRACH, the NCD-SSB may not be sent on the second anchor BWP. In this case, during the process of the terminal performing initial access or small data transmission based on a PRACH on the second anchor BWP, it is considered that measurement of SSB is not needed; or before the terminal performs initial access or small data transmission based on a PRACH on the second anchor BWP, the terminal measures an SSB and/or a TRS on another anchor BWP including this SSB (CD-SSB or NCD-SSB)/TRS, where the measurement result is valid during the process of the terminal performing initial access or small data transmission based on a PRACH on the second anchor BWP, or the terminal uses the measurement result to perform initial access or small data transmission based on a PRACH on the second anchor BWP.

Certainly, if the second anchor BWP supports monitoring of paging information and/or PEI, a TRS may be sent to the terminal on the second anchor BWP, and the terminal may use the TRS for monitoring paging information. If the second anchor BWP does not support monitoring of paging information but supports initial access or small data transmission based on a PRACH, a TRS may not be sent on the second anchor BWP.

It should be known that in this embodiment, using an SSB or a TRS for uplink and downlink transmission means using the measurement result of the SSB or TRS to maintain uplink and downlink synchronization, determine channel quality, determine beams and quasi-co-location (QCL) used for uplink and downlink transmission, and the like.

Optionally, in this embodiment, the content of the configuration information of the serving cell, configuration information of the first anchor BWP, and configuration information of the second anchor BWP is not limited to the foregoing description, and may further include other content, for example, the configuration information of the first anchor BWP further includes a frequency domain position of the first anchor BWP, sizes of frequency domain resources of the first anchor BWP, resources and parameters for the terminal to perform uplink transmission and downlink transmission on the first anchor BWP, and the like.

Optionally, the configuration information of the serving cell, the configuration information of the first anchor BWP, and the configuration information of the second anchor BWP may be carried in system information or dedicated information.

For example, the network device sends system information carrying at least one of the configuration information of the serving cell, the configuration information of the first anchor BWP, and the configuration information of the second anchor BWP, and the terminal receives the system information and uses various configuration information carried in the system information to perform First UL Tx, so that UE can establish an RRC connection or small data transmission with a network device operating on the cell/anchor BWP.

If both the system information and dedicated information carry the foregoing configuration information, the terminal preferentially uses the configuration information carried in the dedicated information to perform First UL Tx. Certainly, the configuration information carried in the system information and dedicated information may be different, such as including different frequency domain units.

For the configuration information of the anchor BWP, frequency resources of an anchored RBS/RBG configured in the system information and dedicated information may be different; or if there are a plurality of anchored RBSs/RBGs configured in the system information and dedicated information, at least one anchored RBS/RBG should be the same or common.

It should be known that in this embodiment, the states of the terminal initiating a PRACH include at least one of the following: non-connected states (idle/inactive) and a connected state (connected).

The following describes the application of the embodiments of this application with reference to specific scenarios.

A terminal in an RRC-IDLE/INACTIVE state detects a CD-SSB on a synchronization raster (synchronization raster), and then determines system information scheduling a first anchor BWP based on the CD-SSB. The system information includes configuration information of a serving cell and configuration information of the first anchor BWP. The terminal determines, by decoding the system information of the first anchor BWP, a cell (cell) formed through aggregation of multiple frequency domain units using the configuration information of the serving cell, and determines a frequency domain position of the first anchor BWP, sizes of frequency domain resources, and resources and parameters for the terminal to perform uplink transmission and downlink transmission using the configuration information of the first anchor BWP. The terminal receives configuration information of a second anchor BWP on the first anchor BWP, where the configuration information includes at least an indication of the use of the second anchor BWP.

When there are a plurality of second anchor BWPs, the purposes of the multiple second anchor BWPs include at least one of the following:
The plurality of second anchor BWPs are used to serve different terminal types, for example, second anchor BWP1 is used for non-RedCap devices (UE), second anchor BWP2 is used for RedCap devices, and second anchor BWP3 is used for ambient IoT devices.

The plurality of second anchor BWPs are used for different use cases, for example, second anchor BWP1 is used for NTN, and second anchor BWP2 is used for terrestrial network (TN). The plurality of second anchor BWPs may further be used for different service types, for example, second anchor BWP1 is used for multicast broadcast services, and second anchor BWP2 is used for small data transmission services.

The plurality of second anchor BWPs may further be used for offloading different uplink and downlink resources/services in a balanced manner, for example, second anchor BWP1 is used for transmitting paging information/PEI and offloading the load of paging information/PEI on first anchor BWP0, and second anchor BWP2 is used for initial access to the cell and offloading the load of uplink and downlink resources required for initial access on first anchor BWP0.

The terminal determines, by decoding the configuration information of the second anchor BWP, the use of the related second anchor BWP, a frequency domain position, sizes of frequency domain resources, a first characteristic/function associated with the second anchor BWP, and a transmission target associated with the first characteristic/function.

The terminal selects the corresponding second anchor BWP for performing related uplink and downlink transmissions and receptions based on the first selection criterion, or the first selection criterion and second selection criterion, such as indication information of the network, a capability thereof (such as a supported bandwidth size, and whether an SSB is needed), and the supported first characteristic/function.

Example 1: It is assumed that a serving cell of a terminal determined by a network device is formed by 4 non-contiguous frequency domain units, denoted as RB set0, 1, 2, and 3; where RB set0 is a first anchor BWP, denoted as FA BWP0 and with a size (BWP size) of 20 MHz; RB set1 and RB set2 are second anchor BWPs, denoted as SA BWP1 and SA BWP2, SA BWP1 has a size of 3 MHz, and SA BWP2 has a size of 10 MHz; and RB set3 is not an anchor BWP, that is, an ordinary BWP. A size of an SSB is 5 MHz. FA BWP0 includes a CD-SSB and supports paging (paging information), broadcast information, and transmission and reception related to initial access (transmission objects in an initial access procedure); SA BWP1 includes no SSB and supports transmission and reception related to initial access, and transmission of broadcast information; and SA BWP2 includes an NCD-SSB and supports only transmission and reception related to initial access and transmission related to small data transmission (transmission objects in a small data transmission procedure). There are two IDLE/INACTIVE terminals, denoted as UE1 and UE2, where UE1 has a reception/sending bandwidth capability (supported bandwidth size) of 5 MHz and is subscribed to receive broadcast information; and UE2 has a reception/sending bandwidth capability of 100 MHz and is not subscribed to receive broadcast information.
1. UE1 and UE2 need to or can only monitor paging information/PEI on FA BWP0 associated with the CD-SSB.
2. Description for UE1 is as follows:
   Based on a time position of broadcast information transmission, UE1 needs to switch from FA BWP0 to SA BWP1 to receive the broadcast information; based on a time position of paging information/PEI transmission, UE1 needs to switch from SA BWP1 to FA BWP0 to monitor the paging information/PEI; or when finishing receiving a first type of broadcast information on SA BWP1, UE1 switches to FA BWP0.

Optionally, UE1 does not expect a time position of monitoring the paging information/PEI to overlap with a time position of receiving the first type of broadcast information transmission; or allows the time position of monitoring the paging information/PEI to overlap (conflict) with the time position of receiving the first type of broadcast information transmission, and when a conflict occurs, UE1 prioritizes reception of the paging information/PEI.

When UE1 receives initial access triggered by paging on FA BWP0, due to its reception/sending bandwidth capability of 5 MHz, UE1 can select only SA BWP1 for initial access. During the initial access procedure of UE1 on SA BWP1, measurement of the SSB is not needed.

### 3. Description for UE2 is as follows:

When UE2 receives initial access triggered by paging on FA BWP0, since UE2 has a reception/sending bandwidth capability of 100 MHz, FA BWP0, SA BWP1, and SA BWP2 are selectable.

UE2 selects SA BWP2 for initial access based on a first selection criterion, such as based on (UE_ID mod N), where N = (total number of FA BWPs + total number of SA BWPs) = 3, and then (UE_ID mod N) = (2 mod 3) = 2; or
UE2 makes a selection based on a first selection criterion, for example, selecting an SA BWP based on indication information of the network device or preferentially selecting an SA BWP based on defined first BWP information, and SA BWP1 and SA BWP2 are selectable. UE2 then selects SA BWP2 for initial access based on a second selection criterion, such as SA BWP2 having a larger bandwidth, or SA BWP2 having an SSB.

When UE2 receives small data transmission triggered by paging on FA BWP0, or UE2 autonomously needs to perform uplink small data transmission, since only SA BWP2 supports small data transmission, UE2 selects SA BWP2 for small data transmission.

Example 2: It is assumed that a serving cell is formed by 4 non-contiguous frequency domain units, denoted as RB set0, 1, 2, and 3; where RB set0 is a first anchor BWP, denoted as FA BWP0 and with a size of 5 MHz; RB set1 and RB set2 are second anchor BWPs, denoted as SA BWP1 and SA BWP2, SA BWP1 has a size of 10 MHz, and SA BWP2 has a size of 20 MHz; and RB set3 is not an anchor BWP, that is, an ordinary BWP. A size of an SSB is 5 MHz. FA BWP0 includes a CD-SSB and supports paging (paging information), broadcast information, and transmission and reception related to initial access (transmission objects in an initial access procedure); SA BWP1 includes no SSB and supports transmission and reception related to initial access and small data transmission (transmission objects in a small data transmission procedure); and SA BWP2 includes an NCD-SSB, supports paging, and supports initial access and small data transmission related transmission (transmission objects in an initial access procedure and transmission objects in a small data transmission procedure) for low-capability devices. There are three terminals, denoted as UE1, UE2, and UE3, where UE1 has a reception/sending bandwidth capability of 5 MHz and is an IoT device or lower-capability device; UE2 has a reception/sending bandwidth capability of 20 MHz and is a RedCap device or low-capability device; and UE3 has a reception/sending bandwidth capability of 100 MHz and is an eMBB device or high-capability device.
1. For UE1, due to the reception/sending bandwidth capability of 5 MHz, it can perform paging, broadcast information, and transmission and reception related to initial access/random access only on FA BWP0.
2. For UE2 and UE3, it needs to be determined whether to monitor paging information/PEI on FA BWP0 or SA BWP2.
   Based on a first selection criterion, if paging information/PEI related to RedCap is configured on FA BWP0 and paging information/PEI related to eMBB is configured on SA BWP2, UE2 selects to monitor paging information/PEI on FA BWP0, and UE3 selects to monitor paging information/PEI on SA BWP2.
3. For UE2 and UE3, when initial access needs to be performed, it needs to be determined whether to perform initial access on FA BWP0, SA BWP1, or SA BWP2.

UE2 is a low-capability terminal and needs an SSB, so based on the first selection criterion, FA BWP0 and SA BWP2 are available; and UE2 then preferentially selects an SA BWP based on a second selection criterion, so UE2 determines to perform initial access on SA BWP2.

UE3 is a high-capability terminal and may need no SSB, so based on the first selection criterion, initial access is determined to be performed on FA BWP0, SA BWP1, and SA BWP2; and based on the second selection criterion, SA BWP is preferentially selected, and the BWP with a smaller ID is selected, so UE3 determines to perform initial access on SA BWP1.

Example 3: It is assumed that a serving cell is formed by 4 non-contiguous frequency domain units, denoted as RB set0, 1, 2, and 3; where RB set0 is a first anchor BWP, denoted as FA BWP0 and with a size of 5MHz; RB set1 and RB set2 are second anchor BWPs, denoted as SA BWP1 and SA BWP2, SA BWP1 has a size of 20 MHz, and SA BWP2 has a size of 50 MHz; and RB set3 is not an anchor BWP, that is, an ordinary BWP. A size of an SSB is 5 MHz.

FA BWP0 includes a CD-SSB and only supports paging (paging information); SA BWP1 includes an NCD-SSB and supports transmission and reception related to initial access and small data transmission (transmission objects in an initial access procedure and transmission objects in a small data transmission procedure); and SA BWP2 includes no SSB and supports transmission and reception related to initial access and small data transmission. There are 2 terminals, denoted as UE1 and UE2, where UE1 has a reception/sending bandwidth capability of 20 MHz and is a RedCap device; and UE2 has a reception/sending bandwidth capability of 100 MHz and is an eMBB device.
1. UE1 and UE2 need to or can only monitor paging information/PEI on FA BWP0 associated with the CD-SSB.
2. When UE1 and UE2 need to initiate initial access, if no initial access resource or transmission reception parameter associated with a first characteristic/function is configured on SA BWP1 or SA BWP2, it indicates that the initial access resources on SA BWP1 and SA BWP2 do not limit the devices used, that is, UE1 and UE2 both can use them.

For UE1, its first selection criterion includes multiple items, and UE1 selects an anchor BWP in a descending order of priorities of the multiple items in the first selection criterion. For example, UE1 determines, based on (e) a transmission target associated with at least one of the following being configured on a third anchor BWP: a terminal type, a terminal capability, and a service type, and (d) a supported SSB or TRS (supported transmission target), to use SA BWP1 including an SSB.

For UE2, its first selection criterion includes (e) a transmission target associated with at least one of the following being configured on a third anchor BWP: a terminal type, a terminal capability, and a service type, and (c) sizes of the BWPs (the third anchor BWP with a size less than or equal to the bandwidth size supported by the terminal is preferably selected); and its second selection criterion includes (c) sizes of the BWPs (the BWP with the largest bandwidth is preferably selected). UE2 selects an anchor BWP in a descending order of priorities (e) and (c) in the first selection criterion, and both SA BWP1 and SA BWP2 satisfy the conditions. UE2 then selects SA BWP2 based on (c) a BWP with a larger bandwidth in the second selection criterion.

In summary, the network device determines a flexible serving cell for the terminal. For the network side, from the perspectives of L1/L2/L3 signaling, procedure, and cell management, adjacent contiguous and/or non-contiguous spectra can be utilized flexibly and efficiently, thereby improving a system capacity and coverage; and for the terminal side, aggregated spectra can improve a data rate perceived by users, reduce energy consumption, reduce delay, and expand a coverage.

After determining the first anchor BWP and the second anchor BWP, the terminal selecting an anchor BWP based on the first selection criterion, or the first selection criterion and the second selection criterion to perform related uplink and downlink transmission can achieve the following benefits:
load balance, where different second anchor BWPs are dispersed by the terminal and therefore are not crowded on the first anchor BWP, which otherwise causes resource shortage; and
a plurality of second anchor BWPs can better support devices of different capability types and different application scenarios, such as TN and NTN.

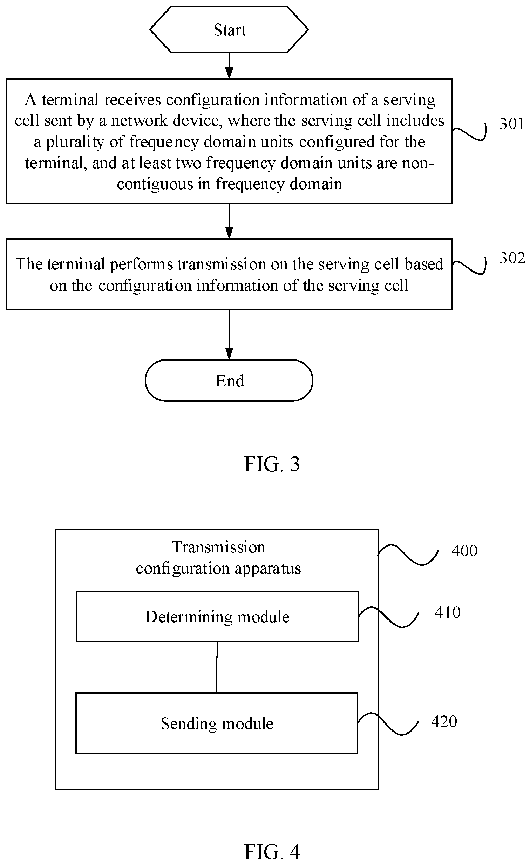

As shown in FIG. 3, a transmission configuration method for a terminal according to an embodiment of this application is provided, including the following steps:
Step 301. A terminal receives configuration information of a serving cell sent by a network device, where the serving cell includes a plurality of frequency domain units configured for the terminal, and at least two frequency domain units are non-contiguous in frequency domain.
Step 302. The terminal performs transmission on the serving cell based on the configuration information of the serving cell; where
   the configuration information of the serving cell includes at least one of the following:
   first information, where the first information is condition information satisfied by the plurality of frequency domain units; and
   second information, where the second information is feature information of frequency domain resources of the serving cell.

Optionally, the first information includes at least one of the following:
transmission parameters of a first signal on the plurality of frequency domain units are quasi-co-located;
transmission parameters of a second signal associated with a control channel or data channel on the plurality of frequency domain units are quasi-co-located;
the transmission parameters of the first signal and the transmission parameters of the second signal are quasi-co-located, where the first signal is a signal on the plurality of frequency domain units, and the second signal is a signal associated with a control channel or data channel on the plurality of frequency domain units;
a difference in downlink reception times of different frequency domain units satisfies a first time range;
a difference in uplink timing advances of different frequency domain units satisfies a second time range; and
a difference in downlink powers of different frequency domain units is less than or equal to a first threshold.

Optionally, the transmission parameters include at least one of the following:
a Doppler shift, a Doppler spread, an average delay, a delay spread, a spatial transmission parameter, and a spatial reception parameter.

Optionally, the second information includes at least one of the following:
the plurality of frequency domain units are contiguous or non-contiguous in frequency domain;
the plurality of frequency domain units use the same or different duplex modes;
the plurality of frequency domain units use the same or different types of spectra;
sizes of frequency domain resources included in the plurality of frequency domain units are different;
frequency domain resources of each frequency domain unit are contiguous;
uplink frequency domain resources and downlink frequency domain resources of the serving cell include at least one different frequency domain unit;
uplink frequency domain resources and downlink frequency domain resources of the serving cell have the same center frequency; and
each of the states of the frequency domain units included in the uplink frequency domain resources of the serving cell and the frequency domain units included in downlink frequency domain resources of the serving cell includes at least one of the following: active state, inactive state, and dormancy state.

Optionally, an interval between adjacent non-contiguous frequency domain units in the plurality of frequency domain units is less than or equal to a second threshold.

Optionally, the method further includes the following step:
the terminal receives configuration information of a first anchor BWP determined by the network device on the serving cell; where
the configuration information of the first anchor BWP includes at least one of the following:
   third information, where the third information is feature information of the first anchor BWP; and
   fourth information, where the fourth information is information of a first target supported for transmission by the first anchor BWP.

Optionally, the third information includes at least one of the following:
the first anchor BWP is used for transmitting non-access stratum NAS mobility information during radio resource control RRC connection establishment, re-establishment, or handover, and is used for secure transmission during RRC connection re-establishment or handover;
the first anchor BWP has an association relationship with a cell-defining synchronization signal block CD-SSB located on a synchronization raster;
the first anchor BWP is configured to an active state; and
the first anchor BWP is not allowed to be configured to a dormancy state or an inactive state.

Optionally, the first target includes at least one of the following:
a CD-SSB, a tracking reference signal TRS, system information, broadcast information, transmission objects in an initial access procedure, transmission objects in a random access procedure, transmission objects in a small data transmission procedure, paging information, paging early indication PEI, terminal group common information, and user data.

Optionally, the method further includes the following step:
the terminal receives configuration information of a second anchor BWP determined by the network device on the serving cell; where
the configuration information of the second anchor BWP includes fifth information, where the fifth information is information of a second target supported for transmission by the second anchor BWP.

Optionally, the second target includes at least one of the following:
a non-cell-defining synchronization signal block NCD-SSB, a TRS, system information, broadcast information, transmission objects in an initial access procedure, transmission objects in a random access procedure, transmission objects in a small data transmission procedure, paging information, PEI, terminal group common information, and user data.

Optionally, the method further includes the following step:
the terminal selects a third anchor BWP from the first anchor BWP and the second anchor BWP based on at least one of the following:
indication information of the network device;
defined first BWP information;
an identifier of the terminal;
sizes of the BWPs;
a supported transmission target; and
a transmission target associated with at least one of the following being configured on the third anchor BWP: a terminal type, a terminal capability, and a service type.

Optionally, the method further includes the following step:
in a case that a plurality of third anchor BWPs are selected, the terminal selects a fourth anchor BWP from the plurality of third anchor BWPs based on at least one of the following:
defined second BWP information;
identifiers of the BWPs;
the identifier of the terminal;
sizes of the BWPs; and
a supported transmission target.

Optionally, the method further includes the following step:
the terminal determines, based on at least one of the following, whether the network device sends an NCD-SSB on the second anchor BWP:
whether an SSB is sent on an adjacent anchor BWP of the second anchor BWP;
an interval between center frequencies of the second anchor BWP and an adjacent anchor BWP;
a size of the second anchor BWP; and
transmission content supported by the second anchor BWP.

The method in the embodiments of this application is applied to a terminal, and the implementations of the terminal in the foregoing network-side method embodiments are applicable to this method, with the same technical effects achieved. Details are not described herein again.

The transmission configuration method provided in the embodiments of this application may be performed by a transmission configuration apparatus. In the embodiments of this application, the transmission configuration apparatus performing the transmission configuration method is used as an example to describe the transmission configuration apparatus provided in the embodiments of this application.

As shown in FIG. 4, a transmission configuration apparatus 400 according to an embodiment of this application includes:
a determining module 410, configured to determine configuration information of a serving cell of a terminal, where the serving cell includes a plurality of frequency domain units configured for the terminal, and at least two frequency domain units are non-contiguous in frequency domain; and
a sending module 420, configured to send the configuration information of the serving cell to the terminal; where
the configuration information of the serving cell includes at least one of the following:
   first information, where the first information is condition information satisfied by the plurality of frequency domain units; and
   second information, where the second information is feature information of frequency domain resources of the serving cell.

Optionally, the first information includes at least one of the following:
transmission parameters of a first signal on the plurality of frequency domain units are quasi-co-located;
transmission parameters of a second signal associated with a control channel or data channel on the plurality of frequency domain units are quasi-co-located;
the transmission parameters of the first signal and the transmission parameters of the second signal are quasi-co-located, where the first signal is a signal on the plurality of frequency domain units, and the second signal is a signal associated with a control channel or data channel on the plurality of frequency domain units;
a difference in downlink reception times of different frequency domain units satisfies a first time range;
a difference in uplink timing advances of different frequency domain units satisfies a second time range; and
a difference in downlink powers of different frequency domain units is less than or equal to a first threshold.

Optionally, the transmission parameters include at least one of the following:
a Doppler shift, a Doppler spread, an average delay, a delay spread, a spatial transmission parameter, and a spatial reception parameter.

Optionally, the second information includes at least one of the following:
the plurality of frequency domain units are contiguous or non-contiguous in frequency domain;
the plurality of frequency domain units use the same or different duplex modes;
the plurality of frequency domain units use the same or different types of spectra;
sizes of frequency domain resources included in the plurality of frequency domain units are different;
frequency domain resources of each frequency domain unit are contiguous;
uplink frequency domain resources and downlink frequency domain resources of the serving cell include at least one different frequency domain unit;
uplink frequency domain resources and downlink frequency domain resources of the serving cell have the same center frequency; and
each of the states of the frequency domain units included in the uplink frequency domain resources of the serving cell and the frequency domain units included in the downlink frequency domain resources of the serving cell includes at least one of the following: active state, inactive state, and dormancy state.

Optionally, an interval between adjacent non-contiguous frequency domain units in the plurality of frequency domain units is less than or equal to a second threshold.

Optionally, the apparatus further includes:
a first anchor BWP determining module, configured to determine, on the serving cell, configuration information of a first anchor bandwidth part (BWP) of the terminal; and
a first anchor BWP configuration information sending module, configured to send configuration information of the first anchor BWP to the terminal; where
the configuration information of the first anchor BWP includes at least one of the following:
   third information, where the third information is feature information of the first anchor BWP; and
   fourth information, where the fourth information is information of a first target supported for transmission by the first anchor BWP.

Optionally, the third information includes at least one of the following:
the first anchor BWP is used for transmitting non-access stratum NAS mobility information during radio resource control RRC connection establishment, re-establishment, or handover, and is used for secure transmission during RRC connection re-establishment or handover;
the first anchor BWP has an association relationship with a cell-defining synchronization signal block CD-SSB located on a synchronization raster;
the first anchor BWP is configured to an active state; and
the first anchor BWP is not allowed to be configured to a dormancy state or an inactive state.

Optionally, the first target includes at least one of the following:
a CD-SSB, a tracking reference signal TRS, system information, broadcast information, transmission objects in an initial access procedure, transmission objects in a random access procedure, transmission objects in a small data transmission procedure, paging information, paging early indication PEI, terminal group common information, and user data.

Optionally, the apparatus further includes:
a second anchor BWP determining module, configured to determine, on the serving cell, configuration information of a second anchor BWP of the terminal; and
a second anchor BWP configuration information sending module, configured to send configuration information of the second anchor BWP to the terminal; where
the configuration information of the second anchor BWP includes fifth information, where the fifth information is information of a second target supported for transmission by the second anchor BWP.

Optionally, the second target includes at least one of the following:
a non-cell-defining synchronization signal block NCD-SSB, a TRS, system information, broadcast information, transmission objects in an initial access procedure, transmission objects in a random access procedure, transmission objects in a small data transmission procedure, paging information, PEI, terminal group common information, and user data.

Optionally, the apparatus further includes:
a first processing module, configured to determine, based on at least one of the following, whether to send the NCD-SSB to the terminal on the second anchor BWP:
whether a synchronization signal block SSB is sent on an adjacent anchor BWP of the second anchor BWP;
an interval between center frequencies of the second anchor BWP and an adjacent anchor BWP;
a size of the second anchor BWP; and
transmission content supported by the second anchor BWP.

It should be noted that the foregoing method performed on the network side is applied to this apparatus, and the implementations in the foregoing network-side method embodiments are applicable to this apparatus.

The transmission configuration apparatus provided in this embodiment of this application can implement the processes implemented in the method embodiment in FIG. 2, with the same technical effects achieved. To avoid repetition, details are not described herein again.

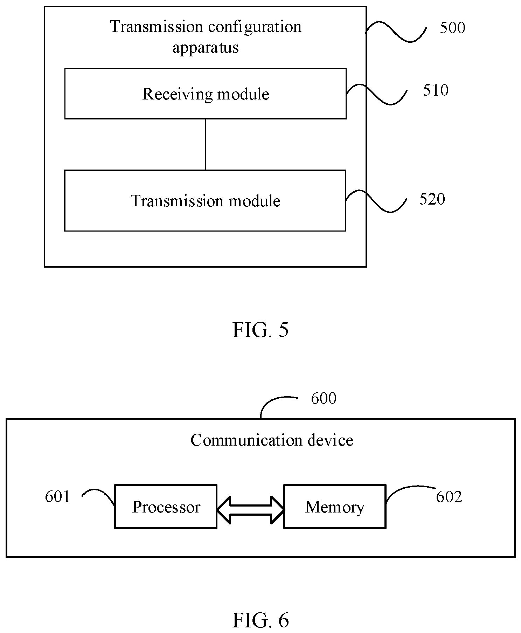

As shown in FIG. 5, a transmission configuration apparatus 500 according to an embodiment of this application includes:
a receiving module 510, configured to receive configuration information of a serving cell sent by a network device, where the serving cell includes a plurality of frequency domain units configured for a terminal, and at least two frequency domain units are non-contiguous in frequency domain; and
a transmission module 520, configured to perform transmission on the serving cell based on the configuration information of the serving cell; where
the configuration information of the serving cell includes at least one of the following:
   first information, where the first information is condition information satisfied by the plurality of frequency domain units; and
   second information, where the second information is feature information of frequency domain resources of the serving cell.

Optionally, the first information includes at least one of the following:
transmission parameters of a first signal on the plurality of frequency domain units are quasi-co-located;
transmission parameters of a second signal associated with a control channel or data channel on the plurality of frequency domain units are quasi-co-located;
the transmission parameters of the first signal and the transmission parameters of the second signal are quasi-co-located, where the first signal is a signal on the plurality of frequency domain units, and the second signal is a signal associated with a control channel or data channel on the plurality of frequency domain units;
a difference in downlink reception times of different frequency domain units satisfies a first time range;
a difference in uplink timing advances of different frequency domain units satisfies a second time range; and
a difference in downlink powers of different frequency domain units is less than or equal to a first threshold.

Optionally, the transmission parameters include at least one of the following:
a Doppler shift, a Doppler spread, an average delay, a delay spread, a spatial transmission parameter, and a spatial reception parameter.

Optionally, the second information includes at least one of the following:
the plurality of frequency domain units are contiguous or non-contiguous in frequency domain;
the plurality of frequency domain units use the same or different duplex modes;
the plurality of frequency domain units use the same or different types of spectra;
sizes of frequency domain resources included in the plurality of frequency domain units are different;
frequency domain resources of each frequency domain unit are contiguous;
uplink frequency domain resources and downlink frequency domain resources of the serving cell include at least one different frequency domain unit;
uplink frequency domain resources and downlink frequency domain resources of the serving cell have the same center frequency; and
each of the states of the frequency domain units included in the uplink frequency domain resources of the serving cell and the frequency domain units included in the downlink frequency domain resources of the serving cell includes at least one of the following: active state, inactive state, and dormancy state.

Optionally, an interval between adjacent non-contiguous frequency domain units in the plurality of frequency domain units is less than or equal to a second threshold.

Optionally, the apparatus further includes:
a first anchor BWP configuration information receiving module, configured to receive configuration information of a first anchor BWP determined by the network device on the serving cell; where
the configuration information of the first anchor BWP includes at least one of the following:
   third information, where the third information is feature information of the first anchor BWP; and
   fourth information, where the fourth information is information of a first target supported for transmission by the first anchor BWP.

Optionally, the third information includes at least one of the following:
the first anchor BWP is used for transmitting non-access stratum NAS mobility information during radio resource control RRC connection establishment, re-establishment, or handover, and is used for secure transmission during RRC connection re-establishment or handover;
the first anchor BWP has an association relationship with a cell-defining synchronization signal block CD-SSB located on a synchronization raster;
the first anchor BWP is configured to an active state; and
the first anchor BWP is not allowed to be configured to a dormancy state or an inactive state.

Optionally, the first target includes at least one of the following:
a CD-SSB, a tracking reference signal TRS, system information, broadcast information, transmission objects in an initial access procedure, transmission objects in a random access procedure, transmission objects in a small data transmission procedure, paging information, paging early indication PEI, terminal group common information, and user data.

Optionally, the apparatus further includes:
a second anchor BWP configuration information receiving module, configured to receive configuration information of a second anchor BWP determined by the network device on the serving cell; where
the configuration information of the second anchor BWP includes fifth information, where the fifth information is information of a second target supported for transmission by the second anchor BWP.

Optionally, the second target includes at least one of the following:
a non-cell-defining synchronization signal block NCD-SSB, a TRS, system information, broadcast information, transmission objects in an initial access procedure, transmission objects in a random access procedure, transmission objects in a small data transmission procedure, paging information, PEI, terminal group common information, and user data.

Optionally, the apparatus further includes:
a first selecting module, configured to select a third anchor BWP from the first anchor BWP and the second anchor BWP based on at least one of the following:
indication information of the network device;
defined first BWP information;
an identifier of the terminal;
sizes of the BWPs;
a supported transmission target; and
a transmission target associated with at least one of the following being configured on the third anchor BWP: a terminal type, a terminal capability, and a service type.

Optionally, the apparatus further includes:
a second selecting module, configured to, in a case that a plurality of third anchor BWPs are selected, select a fourth anchor BWP from the plurality of third anchor BWPs based on at least one of the following:
defined second BWP information;
identifiers of the BWPs;
the identifier of the terminal;
sizes of the BWPs; and
a supported transmission target.

Optionally, the apparatus further includes:
a second processing module, configured to determine, based on at least one of the following, whether the network device sends an NCD-SSB on the second anchor BWP:
whether an SSB is sent on an adjacent anchor BWP of the second anchor BWP;
an interval between center frequencies of the second anchor BWP and an adjacent anchor BWP;
a size of the second anchor BWP; and
transmission content supported by the second anchor BWP.

It should be noted that the foregoing method performed on the terminal side is applied to this apparatus, and the implementations of the terminal in the foregoing network-side method embodiments are applicable to this apparatus, with the same technical effects achieved. Details are not described herein again.

The transmission configuration apparatus in the embodiments of this application may be an electronic device such as an electronic device with an operating system, or a component in an electronic device such as an integrated circuit or chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The transmission configuration apparatus provided in this embodiment of this application can implement the processes implemented in the method embodiment in FIG. 3, with the same technical effects achieved. To avoid repetition, details are not described herein again.

As shown in FIG. 6, an embodiment of this application further provides a communication device 600 including a processor 601 and a memory 602, where the memory 602 stores a program or instructions capable of running on the processor 601. For example, in a case that the communication device 600 is a terminal, and when the program or instructions are executed by the processor 601, the steps of the foregoing terminal-side transmission configuration method embodiment are implemented, with the same technical effects achieved. In a case that the communication device 600 is a network device, and when the program or instructions are executed by the processor 601, the steps of the foregoing network device-side transmission configuration method embodiment are implemented, with the same technical effects achieved. To avoid repetition, details are not described herein again.

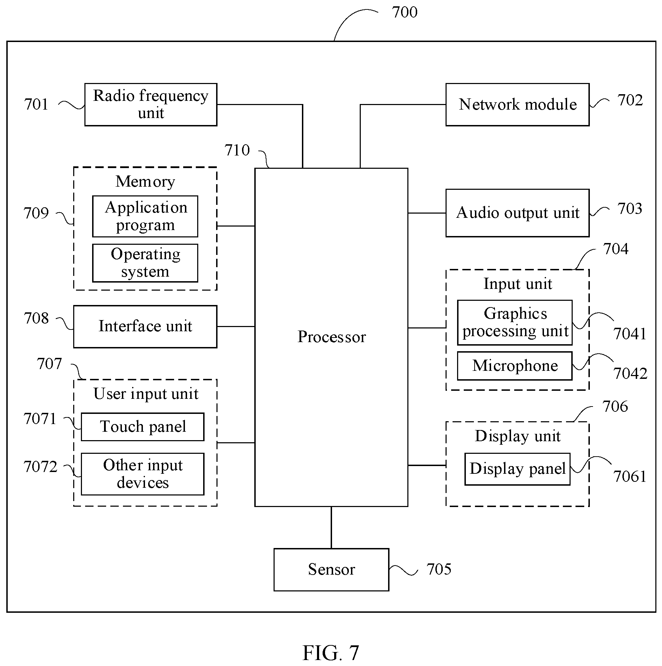

An embodiment of this application further provides a terminal including a processor and a communication interface. The communication interface is coupled to the processor, and the processor is configured to run a program or instructions to implement the steps of the method embodiment shown in FIG. 3. This terminal embodiment corresponds to the foregoing method embodiment on the terminal side. All processes and implementations in the foregoing method embodiment are applicable to this terminal embodiment, with the same technical effects achieved. Specifically, FIG. 7 is a schematic diagram of a hardware structure of a terminal implementing the embodiments of this application.

A terminal 700 includes but is not limited to at least part of these components: a radio frequency unit 701, a network module 702, an audio output unit 703, an input unit 704, a sensor 705, a display unit 706, a user input unit 707, an interface unit 708, a memory 709, a processor 710, and the like.

It can be understood by persons skilled in the art that the terminal 700 may further include a power supply (for example, battery) supplying power to the components. The power supply may be logically connected to the processor 710 via a power management system, so that functions such as charge management, discharge management, and power consumption management are implemented via the power management system. The structure of the terminal shown in FIG. 7 does not constitute any limitation on the terminal, and the terminal may include more or fewer components than shown in the figure, or combine some of the components, or have different arrangements of the components. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or video obtained by an image capture apparatus (such as a camera) in an image capture or video capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (for example, volume control button or on/off button), a trackball, a mouse, and a joystick. Details are not described herein.

In this embodiment of this application, the radio frequency unit 701 receives downlink data from a network-side device and transfers the data to the processor 710 for processing; and the radio frequency unit 701 can additionally send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may mainly include a first storage area for storing programs or instructions and a second storage area for storing data. The first storage area may store an operating system, an application program or instruction required by at least one function (for example, a sound play function or an image play function), and the like. Additionally, the memory 709 may be a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not limited to these or any other applicable types of memories.

The processor 710 may include one or more processing units. Optionally, the processor 710 integrates an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 710.

Optionally, the radio frequency unit 701 is configured to:
receive configuration information of a serving cell sent by a network device, where the serving cell includes a plurality of frequency domain units configured for the terminal, and at least two frequency domain units are non-contiguous in frequency domain; and
perform transmission on the serving cell based on the configuration information of the serving cell; where
the configuration information of the serving cell includes at least one of the following:
   first information, where the first information is condition information satisfied by the plurality of frequency domain units; and
   second information, where the second information is feature information of frequency domain resources of the serving cell.

Optionally, the first information includes at least one of the following:
transmission parameters of a first signal on the plurality of frequency domain units are quasi-co-located;
transmission parameters of a second signal associated with a control channel or data channel on the plurality of frequency domain units are quasi-co-located;
the transmission parameters of the first signal and the transmission parameters of the second signal are quasi-co-located, where the first signal is a signal on the plurality of frequency domain units, and the second signal is a signal associated with a control channel or data channel on the plurality of frequency domain units;
a difference in downlink reception times of different frequency domain units satisfies a first time range;
a difference in uplink timing advances of different frequency domain units satisfies a second time range; and
a difference in downlink powers of different frequency domain units is less than or equal to a first threshold.

Optionally, the transmission parameters include at least one of the following:
a Doppler shift, a Doppler spread, an average delay, a delay spread, a spatial transmission parameter, and a spatial reception parameter.

Optionally, the second information includes at least one of the following:
the plurality of frequency domain units are contiguous or non-contiguous in frequency domain;
the plurality of frequency domain units use the same or different duplex modes;
the plurality of frequency domain units use the same or different types of spectra;
sizes of frequency domain resources included in the plurality of frequency domain units are different;
frequency domain resources of each frequency domain unit are contiguous;
uplink frequency domain resources and downlink frequency domain resources of the serving cell include at least one different frequency domain unit;
uplink frequency domain resources and downlink frequency domain resources of the serving cell have the same center frequency; and
each of the states of the frequency domain units included in the uplink frequency domain resources of the serving cell and the frequency domain units included in the downlink frequency domain resources of the serving cell includes at least one of the following: active state, inactive state, and dormancy state.

Optionally, an interval between adjacent non-contiguous frequency domain units in the plurality of frequency domain units is less than or equal to a second threshold.

Optionally, the radio frequency unit 701 is configured to receive configuration information of a first anchor BWP determined by the network device on the serving cell; where
the configuration information of the first anchor BWP includes at least one of the following:
third information, where the third information is feature information of the first anchor BWP; and
fourth information, where the fourth information is information of a first target supported for transmission by the first anchor BWP.

Optionally, the third information includes at least one of the following:
the first anchor BWP is used for transmitting non-access stratum NAS mobility information during radio resource control RRC connection establishment, re-establishment, or handover, and is used for secure transmission during RRC connection re-establishment or handover;
the first anchor BWP has an association relationship with a cell-defining synchronization signal block CD-SSB located on a synchronization raster;
the first anchor BWP is configured to an active state; and
the first anchor BWP is not allowed to be configured to a dormancy state or an inactive state.

Optionally, the first target includes at least one of the following:
a CD-SSB, a tracking reference signal TRS, system information, broadcast information, transmission objects in an initial access procedure, transmission objects in a random access procedure, transmission objects in a small data transmission procedure, paging information, paging early indication PEI, terminal group common information, and user data.

Optionally, the radio frequency unit 701 is configured to receive configuration information of a second anchor BWP determined by the network device on the serving cell; where
the configuration information of the second anchor BWP includes fifth information, where the fifth information is information of a second target supported for transmission by the second anchor BWP.

Optionally, the second target includes at least one of the following:
a non-cell-defining synchronization signal block NCD-SSB, a TRS, system information, broadcast information, transmission objects in an initial access procedure, transmission objects in a random access procedure, transmission objects in a small data transmission procedure, paging information, PEI, terminal group common information, and user data.

Optionally, the processor 710 is configured to select a third anchor BWP from the first anchor BWP and the second anchor BWP based on at least one of the following:
indication information of the network device;
defined first BWP information;
an identifier of the terminal;
sizes of the BWPs;
a supported transmission target; and
a transmission target associated with at least one of the following being configured on the third anchor BWP: a terminal type, a terminal capability, and a service type.

Optionally, the processor 710 is configured to: in a case that a plurality of third anchor BWPs are selected, select a fourth anchor BWP from the plurality of third anchor BWPs based on at least one of the following:
defined second BWP information;
identifiers of the BWPs;
the identifier of the terminal;
sizes of the BWPs; and
a supported transmission target.

Optionally, the processor 710 is configured to determine, based on at least one of the following, whether the network device sends an NCD-SSB on the second anchor BWP:
whether an SSB is sent on an adjacent anchor BWP of the second anchor BWP;
an interval between center frequencies of the second anchor BWP and an adjacent anchor BWP;
a size of the second anchor BWP; and
transmission content supported by the second anchor BWP.

It can be understood that for the implementation processes of the implementations mentioned in this embodiment, reference may be made to the related description of the terminal-side method embodiments, with the same or corresponding technical effects achieved. To avoid repetition, details are not described herein again.

An embodiment of this application further provides a network device including a processor and a communication interface. The communication interface is coupled to the processor, and the processor is configured to run a program or instructions to implement the steps of the method embodiment shown in FIG. 2. The network device embodiment corresponds to the foregoing network device method embodiment. All implementations in the foregoing method embodiment may be applicable to the network device embodiment, with the same technical effects achieved.

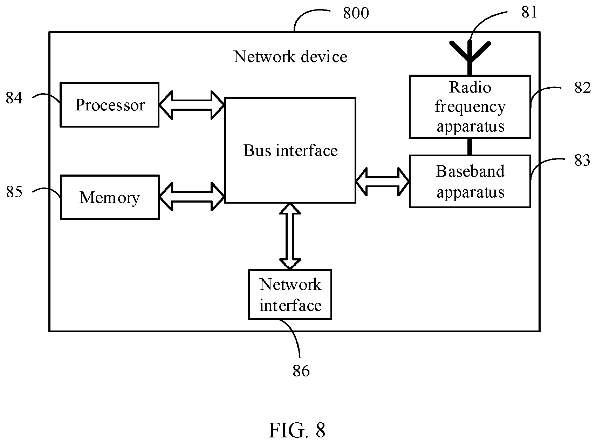

Specifically, an embodiment of this application further provides a network device. As shown in FIG. 8, the network device 800 includes an antenna 81, a radio frequency apparatus 82, a baseband apparatus 83, a processor 84, and a memory 85. The antenna 81 is connected to the radio frequency apparatus 82. Uplink, the radio frequency apparatus 82 receives information through the antenna 81, and sends the received information to the baseband apparatus 83 for processing. Downlink, the baseband apparatus 83 processes to-be-sent information, and sends the information to the radio frequency apparatus 82; and the radio frequency apparatus 82 processes the received information and then sends the information out through the antenna 81.

The method executed by the network-side device in the aforesaid embodiments may be implemented on the baseband apparatus 83. The baseband apparatus 83 includes a baseband processor.

The baseband apparatus 83 may include, for example, at least one baseband processing unit, where a plurality of chips are disposed on the baseband processing unit. As shown in FIG. 8, one of the chips is, for example, a baseband processor, and connected to the memory 85 through a bus interface, to invoke a program in the memory 85 to perform the operations of the network device shown in the foregoing method embodiments.

The network device may further include a network interface 86, where the interface is, for example, a common public radio interface (Common Public Radio Interface, CPRI).

Specifically, the network device 800 in this embodiment of this application further includes instructions or a program stored in the memory 85 and capable of running on the processor 84. The processor 84 invokes the instructions or program in the memory 85 to execute the method executed by the modules shown in FIG. 4, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing transmission configuration method embodiments are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk. In some embodiments, the readable storage medium may be a non-transitory readable storage medium.

An embodiment of this application further provides a chip, where the chip includes a processor and a communication interface, the communication interface is coupled to the processor, and the processor is configured to run a program or instructions to implement the processes of the foregoing transmission configuration method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing transmission configuration method embodiments, with the same technical effects achieved. To avoid repetition, details are not described herein again.

An embodiment of this application further provides a wireless communication system including a terminal and a network device, where the terminal is configured to perform the steps of the foregoing transmission configuration method executed by the terminal, and the network device is configured to perform the steps of the foregoing transmission configuration method executed by the network device.

In the embodiments of this application, the network device is also referred to as a network-side device.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

From the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. The computer software product may be stored in a storage medium (for example, a ROM, a RAM, a magnetic disk, or an optical disk), and includes several instructions for instructing a terminal or network-side device to execute the method described in the embodiments of this application.

The foregoing describes the embodiments of this application with reference to the accompanying drawings. However, this application is not limited to the foregoing specific embodiments. These specific embodiments are merely for illustration rather than limitation. Inspired by this application, persons of ordinary skill in the art may develop many other forms of embodiments without departing from the essence of this application and the protection scope of the claims, and all such forms of embodiments shall fall within the protection scope of this application.

## Claims

1. A transmission configuration method, comprising:
determining, by a network device, configuration information of a serving cell of a terminal, wherein the serving cell comprises a plurality of frequency domain units configured for the terminal, and at least two frequency domain units are non-contiguous in frequency domain; and
sending, by the network device, the configuration information of the serving cell to the terminal; wherein
the configuration information of the serving cell comprises at least one of the following:
first information, wherein the first information is condition information satisfied by the plurality of frequency domain units; and
second information, wherein the second information is feature information of frequency domain resources of the serving cell.

2. The method according to claim 1, wherein the first information comprises at least one of the following:
transmission parameters of a first signal on the plurality of frequency domain units are quasi-co-located;
transmission parameters of a second signal associated with a control channel or data channel on the plurality of frequency domain units are quasi-co-located;
the transmission parameters of the first signal and the transmission parameters of the second signal are quasi-co-located, wherein the first signal is a signal on the plurality of frequency domain units, and the second signal is a signal associated with a control channel or data channel on the plurality of frequency domain units;
a difference in downlink reception times of different frequency domain units satisfies a first time range;
a difference in uplink timing advances of different frequency domain units satisfies a second time range; and
a difference in downlink powers of different frequency domain units is less than or equal to a first threshold.

3. The method according to claim 2, wherein the transmission parameters comprise at least one of the following:
a Doppler shift, a Doppler spread, an average delay, a delay spread, a spatial transmission parameter, and a spatial reception parameter.

4. The method according to any one of claims 1 to 3, wherein the second information comprises at least one of the following:
the plurality of frequency domain units are contiguous or non-contiguous in frequency domain;
the plurality of frequency domain units use the same or different duplex modes;
the plurality of frequency domain units use the same or different types of spectra;
sizes of frequency domain resources comprised in the plurality of frequency domain units are different;
frequency domain resources of each frequency domain unit are contiguous;
uplink frequency domain resources and downlink frequency domain resources of the serving cell comprise at least one different frequency domain unit;
uplink frequency domain resources and downlink frequency domain resources of the serving cell have the same center frequency; and
each of the states of the frequency domain units comprised in the uplink frequency domain resources of the serving cell and the frequency domain units comprised in the downlink frequency domain resources of the serving cell comprises at least one of the following: active state, inactive state, and dormancy state.

5. The method according to any one of claims 1 to 4, wherein an interval between adjacent non-contiguous frequency domain units in the plurality of frequency domain units is less than or equal to a second threshold.

6. The method according to any one of claims 1 to 5, further comprising:
determining, by the network device on the serving cell, configuration information of a first anchor bandwidth part BWP of the terminal; and
sending, by the network device, the configuration information of the first anchor BWP to the terminal; wherein
the configuration information of the first anchor BWP comprises at least one of the following:
third information, wherein the third information is feature information of the first anchor BWP; and
fourth information, wherein the fourth information is information of a first target supported for transmission by the first anchor BWP.

7. The method according to claim 6, wherein the third information comprises at least one of the following:
the first anchor BWP is used for transmitting non-access stratum NAS mobility information during radio resource control RRC connection establishment, re-establishment, or handover, and is used for secure transmission during RRC connection re-establishment or handover;
the first anchor BWP has an association relationship with a cell-defining synchronization signal block CD-SSB located on a synchronization raster;
the first anchor BWP is configured to an active state; and
the first anchor BWP is not allowed to be configured to a dormancy state or an inactive state.

8. The method according to claim 6 or 7, wherein the first target comprises at least one of the following:
a CD-SSB, a tracking reference signal TRS, system information, broadcast information, transmission objects in an initial access procedure, transmission objects in a random access procedure, transmission objects in a small data transmission procedure, paging information, paging early indication PEI, terminal group common information, and user data.

9. The method according to any one of claims 1 to 8, further comprising:
determining, by the network device on the serving cell, configuration information of a second anchor BWP of the terminal; and
sending, by the network device, the configuration information of the second anchor BWP to the terminal; wherein
the configuration information of the second anchor BWP comprises fifth information, wherein the fifth information is information of a second target supported for transmission by the second anchor BWP.

10. The method according to claim 9, wherein the second target comprises at least one of the following:
a non-cell-defining synchronization signal block NCD-SSB, a TRS, system information, broadcast information, transmission objects in an initial access procedure, transmission objects in a random access procedure, transmission objects in a small data transmission procedure, paging information, PEI, terminal group common information, and user data.

11. The method according to claim 9 or 10, further comprising:
determining, by the network device based on at least one of the following, whether to send the NCD-SSB to the terminal on the second anchor BWP:
whether a synchronization signal block SSB is sent on an adjacent anchor BWP of the second anchor BWP;
an interval between center frequencies of the second anchor BWP and an adjacent anchor BWP;
a size of the second anchor BWP; and
transmission content supported by the second anchor BWP.

12. A transmission configuration method, comprising:
receiving, by a terminal, configuration information of a serving cell sent by a network device, wherein the serving cell comprises a plurality of frequency domain units configured for the terminal, and at least two frequency domain units are non-contiguous in frequency domain; and
performing, by the terminal, transmission on the serving cell based on the configuration information of the serving cell; wherein
the configuration information of the serving cell comprises at least one of the following:
first information, wherein the first information is condition information satisfied by the plurality of frequency domain units; and
second information, wherein the second information is feature information of frequency domain resources of the serving cell.

13. The method according to claim 12, further comprising:
receiving, by the terminal, configuration information of a first anchor BWP determined by the network device on the serving cell; wherein
the configuration information of the first anchor BWP comprises at least one of the following:
third information, wherein the third information is feature information of the first anchor BWP; and
fourth information, wherein the fourth information is information of a first target supported for transmission by the first anchor BWP.

14. The method according to claim 12 or 13, further comprising:
receiving, by the terminal, configuration information of a second anchor BWP determined by the network device on the serving cell; wherein
the configuration information of the second anchor BWP comprises fifth information, wherein the fifth information is information of a second target supported for transmission by the second anchor BWP.

15. The method according to claim 14, further comprising:
selecting, by the terminal, a third anchor BWP from the first anchor BWP and the second anchor BWP based on at least one of the following:
indication information of the network device;
defined first BWP information;
an identifier of the terminal;
sizes of the BWPs;
a supported transmission target; and
a transmission target associated with at least one of the following being configured on the third anchor BWP: a terminal type, a terminal capability, and a service type.

16. The method according to claim 15, further comprising:
in a case that a plurality of third anchor BWPs are selected, selecting, by the terminal, a fourth anchor BWP from the plurality of third anchor BWPs based on at least one of the following:
defined second BWP information;
identifiers of the BWPs;
the identifier of the terminal;
sizes of the BWPs; and
a supported transmission target.

17. The method according to any one of claims 14 to 16, further comprising:
determining, by the terminal based on at least one of the following, whether the network device sends an NCD-SSB on the second anchor BWP:
whether an SSB is sent on an adjacent anchor BWP of the second anchor BWP;
an interval between center frequencies of the second anchor BWP and an adjacent anchor BWP;
a size of the second anchor BWP; and
transmission content supported by the second anchor BWP.

18. A transmission configuration apparatus, comprising:
a determining module, configured to determine configuration information of a serving cell of a terminal, wherein the serving cell comprises a plurality of frequency domain units configured for the terminal, and at least two frequency domain units are non-contiguous in frequency domain; and
a sending module, configured to send the configuration information of the serving cell to the terminal; wherein
the configuration information of the serving cell comprises at least one of the following:
first information, wherein the first information is condition information satisfied by the plurality of frequency domain units; and
second information, wherein the second information is feature information of frequency domain resources of the serving cell.

19. A transmission configuration apparatus, comprising:
a receiving module, configured to receive configuration information of a serving cell sent by a network device, wherein the serving cell comprises a plurality of frequency domain units configured for a terminal, and at least two frequency domain units are non-contiguous in frequency domain; and
a transmission module, configured to perform transmission on the serving cell based on the configuration information of the serving cell; wherein
the configuration information of the serving cell comprises at least one of the following:
first information, wherein the first information is condition information satisfied by the plurality of frequency domain units; and
second information, wherein the second information is feature information of frequency domain resources of the serving cell.

20. A terminal, comprising a processor and a memory, wherein the memory stores a program or instructions capable of running on the processor, and when the program or instructions are executed by the processor, the steps of the transmission configuration method according to any one of claims 12 to 17 are implemented.

21. A network device, comprising a processor and a memory, wherein the memory stores a program or instructions capable of running on the processor, and when the program or instructions are executed by the processor, the steps of the transmission configuration method according to any one of claims 1 to 11 are implemented.

22. A readable storage medium, wherein the readable storage medium stores a program or instructions, and when the program or instructions are executed by a processor, the steps of the transmission configuration method according to any one of claims 1 to 11 are implemented, or the steps of the transmission configuration method according to any one of claims 12 to 17 are implemented.

23. A chip, wherein the chip comprises a processor and a communication interface, the communication interface is coupled to the processor, and the processor is configured to run a program or instructions to implement the steps of the transmission configuration method according to any one of claims 1 to 11 or to implement the steps of the transmission configuration method according to any one of claims 12 to 17.
